# EUROPÄISCHE PATENTSCHRIFT

(11) **EP 3 961 166 B1**
(45) Veröffentlichungstag und Bekanntmachung des Hinweises auf die Patenterteilung: **18.11.2026**
(21) Anmeldenummer: 20192453.7
(22) Anmeldetag: 24.08.2020
(51) Int. Cl.: G01J 3/28, B41F 33/00, B41J 3/00, G01J 3/50, B41M 5/00, G01J 1/00, B41J 11/00

(54) **VERFAHREN ZUM DRUCKEN EINES DEKORS UND VORRICHTUNG DAFÜR**
METHOD FOR PRINTING A DECORATION AND DEVICE FOR SAME
PROCÉDÉ D'IMPRESSION D'UN DÉCOR ET DISPOSITIF CORRESPONDANT

(43) Veröffentlichungstag der Anmeldung: 02.03.2022
(73) Patentinhaber: SWISS KRONO Tec AG, 6003 Luzern (CH)
(72) Erfinder: Pfeiffer, Sabrina, 16866 Kyritz (DE); Dicke, Sebastian, 16868 Bantikow (DE)
(74) Vertreter: Gramm, Lins & Partner Patent- und Rechtsanwälte PartGmbB

(56) Entgegenhaltungen:
- WO-A1-2008/034156
- WO-A1-2019/234147

## Beschreibung

Die Erfindung betrifft ein Verfahren zum Drucken eines zu druckenden Dekors auf eine Mehrzahl von Druck-Oberflächen mittels einer digitalen Druckanlage. Die Erfindung betrifft zudem eine Vorrichtung zum Durchführen eines derartigen Verfahrens.

In vielen technischen Bereichen werden heute Dekore auf Oberflächen von Gegenständen gedruckt, um den optischen Eindruck aufzuwerten oder zu verändern. So werden beispielsweise Holzwerkstoffplatten, die als Fußboden-, Wand- oder Deckenverkleidung verwendet werden, mit einem Dekor versehen. Dabei kann entweder das Dekor direkt auf die Holzwerkstoffplatten oder eine Grundierung auf der Platte aufgebracht werden oder das Dekor wird auf ein Dekorpapier aufgebracht, das später auf die Holzwerkstoffplatte aufgebracht, beispielsweise auflaminiert oder aufgeklebt wird.

Da individuelle Ausgestaltungen vieler Gegenstände heute in vielen technischen Bereichen von Kunden nachgefragt und somit geliefert werden müssen, ist die Losgröße oftmals sehr klein. Dies bedeutet, dass ein Dekor zwar auf mehrere Gegenstände mit Druck-Oberflächen gedruckt werden muss, die Anzahl der Gegenstände ist jedoch relativ klein. Die Druckanlage muss folglich in der Lage sein, schnell unterschiedliche Dekore zu drucken. Daher setzen sich in vielen technischen Bereichen Digitaldrucker oder digitale Druckanlagen durch und lösen die aus dem Stand der Technik seit langem bekannten Walzendruckanlagen ab.

Die Qualität des Druckergebnisses hängt von einer Vielzahl unterschiedlicher Parameter ab, die oftmals innerhalb einer Produktionsreihe variieren können und in vielen Fällen nicht oder nur schwer vom Betreiber der Druckanlage gesteuert oder beeinflusst werden können. Bei der Herstellung selbst kann es zu einer Wolkigkeit, also einer inhomogenen Farbe des Papieres, kommen. Auch die Welligkeit oder die Farbe kann zu Abweichungen im Druckbild führen.

Eine aufgebrachte Grundierung oder Primer kann ebenfalls das Druckergebnis beeinflussen. So sind die Temperatur, die Farbe und gegebenenfalls die Viskosität sowie die Auftragsgenauigkeit des Betreibers Parameter, die Einfluss auf das gedruckte Dekor nehmen können. Nachdem der Primer oder die Drucktinte aufgetragen wurde, wird der jeweilige Auftrag getrocknet, wodurch ebenfalls die Farbe und damit die Druckqualität beeinflusst werden kann. Gleiches gilt selbstverständlich für die verwendete Drucktinte, deren Temperatur, Viskosität oder Pigmentgröße eine Auswirkung auf das Druckbild und damit die farbliche Qualität des aufgebrachten Dekors haben.

Bei einem Primer handelt es sich um eine Schicht, auf der die das jeweilige Dekor bildenden farbigen Druckpunkte aufgebracht werden. Diese Schicht kann auch als Grundierung bezeichnet werden. Die Schicht keine eine Grundfarbe aufweisen, beispielsweise weiß, um farbliche Unregelmäßigkeiten der Oberfläche des zu bedruckenden Werkstückes auszugleichen und für reproduzierbare und vorhersagbare Grundbedingungen für den Druck des Dekors zu sorgen. Alternativ oder zusätzlich dazu ist die Schicht als Farbaufnahmeschicht ausgebildet und verändert nicht oder nicht nur das optische Erscheinungsbild der Oberfläche, beispielsweise deren Farbe, sondern die Fähigkeit, die Farbe aufzunehmen.

Gedruckte Dekore werden in vielen technischen Bereichen verwendet und bestimmen heute das optische Erscheinungsbild zahlreicher Produkte. Insbesondere dann, wenn viele einzelne Gegenstände, die jeweils mit einem Dekor bedruckt sind, gemeinsam verwendet werden, ist eine hohe Druckqualität wichtig. Dies betrifft beispielsweise Paneele, die als Wand-, Decken- oder Bodenbelag verwendet werden. Dazu werden mehrere Paneele miteinander verbunden und verlegt. Dabei werden oftmals Produkte unterschiedlicher Herstellungschargen miteinander vermischt verwendet. Um ein einheitliches Erscheinungsbild gewährleisten zu können, muss sichergestellt werden, dass sich das Druckbild von Paneelen aus unterschiedlichen Chargen nicht voneinander unterscheidet. Dies ist ebenso wichtig bei Anschlusslieferungen, die beispielsweise nötig werden, wenn ein defektes Paneel oder Produkt ausgetauscht werden muss.

Aus dem Stand der Technik sind verschiedene Verfahren bekannt, wie mit derartigen Abweichungen umzugehen ist. Aus der WO 2020/079067 A1 ist beispielsweise ein Verfahren bekannt, bei dem zunächst ein erster Farbwert an einer Stelle des zu druckenden Dekors bestimmt wird. Das Dekor wird mittels eines Tintenstrahldruckers gedruckt. Danach wird ein zweiter Farbwert durch Messung an der gleichen Stelle des gedruckten Dekors ermittelt. Aus diesen wird über ein Konvertierungsmodul ein dritter Farbwert bestimmt, der dann mit dem ersten Farbwert verglichen wird. Ist die Abweichung größer als ein vorbestimmter Grenzwert, wird die Produktion gestoppt. Nachteilig ist, dass das gedruckte Dekor nicht unmittelbar mit einem gewünschten Ergebnis verglichen werden kann. Vielmehr muss durch das Konvertierungsmodul der Messwert so umgerechnet werden, dass er einen digitalen Sollwert entspricht. Hinzu kommt, dass dieses Verfahren nur an wenigen Stellen des Dekors durchgeführt wird, sodass Schwankungen der Qualität des Dekors nur schlecht oder gar nicht festgestellt werden können. Hinzu kommt, dass Abweichungen gegebenenfalls zwar festgestellt, aber durch das Verfahren nicht korrigiert werden können.

Die WO 2019/234147 A1 geht einen anderen Weg. In dem in dieser Druckschrift beschriebenen Verfahren werden die Druckwerte, die dem Druck zugrunde gelegt sind, bei der Bestimmung von Abweichungen verändert, um die Qualität zu verbessern. Bei dem Verfahren wird zunächst ein hyperspektrales digitales Bild des Dekors erzeugt. Dieses wird kalibriert, indem beispielsweise der Mittelwert mehrerer dieser hyperspektralen digitalen Bilder gebildet wird. Ein hyperspektrales Bild beinhaltet Informationen nicht nur über den sichtbaren Bereich des Farbspektrums, sondern auch darüber hinaus. Es ist aufwendig aufzunehmen und enthält eine große Menge Daten, weswegen die Anzeige und die Verarbeitung derartiger Bilder aufwendig ist. Daher wird von dem kalibrierten hyperspektralen Bild ein digitales Soll-Bild erzeugt, das beispielsweise durch eine Digitalfotografie erzeugt wird. Ein solches Bild wird zudem als Ist-Bild vom gedruckten Dekor erzeugt, sodass die beiden Bilder miteinander verglichen werden können. Nachteilig ist, dass diese Bilder eine deutlich geringere Anzahl von Daten und Informationen sowohl über das gedruckte Dekor als auch das zu druckende Dekor enthalten, um eine Verarbeitung so schnell zu ermöglichen und zu erlauben, dass sie während des Druckprozesses erfolgen kann. Dadurch leidet jedoch leider die Qualität des Vergleiches und damit des Ergebnisses.

Der Erfindung liegt die Aufgabe zugrunde, Nachteile aus dem Stand der Technik zu beheben oder zumindest abzumildern.

Die Erfindung löst die gestellte Aufgabe durch ein Verfahren mit den Schritten von Anspruch 1.

Der Vergleich des gedruckten Dekors mit dem zu druckenden Dekor wird beim erfindungsgemäßen Verfahren anhand der verschiedenen Messdaten durchgeführt. Es werden die Druck-Messdaten mit den Referenz-Messdaten verglichen. Die Referenz-Messdaten entsprechen folglich den Daten, die an einem Dekor gemessen wurden oder würden, das als Referenz dienen kann, also exakt dem gewünschten Dekor entspricht. Die der Erfindung zugrunde liegende Erkenntnis liegt folglich darin, dass es nicht notwendig ist ganze Bilder miteinander zu vergleichen, um die Qualität des gedruckten Dekors zu ermitteln, wenn Messdaten definiert werden können, deren Vergleich für das gedruckte Dekor und das zur druckende Dekor den Vergleich der Bilder oder der gesamten Dekore überflüssig macht. Dabei sind die Messdaten ortsaufgelöst, sodass auch Schwankungen der Druckqualität, wie sie insbesondere durch die oben aufgeführten Parameter entstehen können, festgestellt werden können, auch wenn sie auf räumlich kleiner Skala, beispielsweise innerhalb eines einzigen gedruckten Dekors, auftreten. Zudem sind die Messdaten hyperspektral, sodass auch Informationen jenseits des sichtbaren Lichtes enthalten sind und abgeglichen werden können.

Die digitale Vorlage entspricht vorzugsweise den Steuerparametern, mit denen die Druckanlage angesteuert wird. Dies betrifft insbesondere Steuerbefehle darüber, an welcher Stelle der Druck-Oberfläche welche Menge welcher Tinte aufgebracht werden soll. Vorzugsweise enthalten die Steuerparameter alle Informationen, die zum Betreiben einer Druckeinheit der Druckanlage notwendig sind.

Wird im erfindungsgemäßen Verfahren beim Vergleichen der Druck-Messdaten mit den Referenz-Messdaten eine Abweichung festgestellt, die ein vorbestimmtes Kriterium erfüllt, beispielsweise eine vorbestimmte Abweichung überschreitet, wird adäquat auf diese Abweichung reagiert. Dies geschieht insbesondere, indem die digitale Vorlage geändert wird. Dadurch wird erreicht, dass bei einem mit der geänderten digitalen Vorlage gedruckten Dekor das Maß der Abweichung kleiner ist und somit das vorbestimmte Kriterium gegebenenfalls nicht mehr erfüllt. Wird das Kriterium nicht erfüllt, entspricht das gedruckte Dekor qualitativ dem gewünschten Dekor. Wird das Kriterium hingegen erfüllt, ist eine Anpassung der digitalen Vorlage notwendig, sodass davon ausgegangen werden kann, dass das gedruckte Dekor den Anforderungen an die Druckqualität nicht entspricht und als Ausschuss aussortiert werden muss.

In einer bevorzugten Ausgestaltung ist ein zeitlicher Abstand zwischen zwei aufeinanderfolgenden Ausführungen des Schrittes b. unabhängig davon, ob die digitale Vorlage geändert wurde. Die Produktion, insbesondere der Takt, mit dem das Dekor auf die Druck-Oberflächen aufgedruckt wird, wird folglich nicht verändert, sodass eine Korrektur oder Änderung der digitalen Vorlage Inline, also ohne eine Unterbrechung oder Verzögerung des Produktionsverfahrens vorgenommen wird.

Vorzugsweise beinhaltet das Bereitstellen der Referenz-Messdaten in Schritt a. folgende Schritte:
a1. Bereitstellen einer digitalen Vorlage eines zu druckenden Dekors,
a2. Drucken des zu druckenden Dekors anhand der digitalen Vorlage auf eine Referenzoberfläche,
a3. Messen der Messgrößen des auf die Referenzoberfläche gedruckten Dekors, sodass die Referenz-Messdaten erhalten werden.

Die digitale Vorlage eines zu druckenden Dekors wird in aus dem Stand der Technik an sich bekannter Weise der Druckanlage bereitgestellt. Die Druckanlage wird durch diese digitale Vorlage angesteuert, das zu druckende Dekor auf die Referenzoberfläche zu drucken. Dabei entspricht die Referenzoberfläche vorzugsweise in Material, Größe, Haptik und/oder Farbe den im Laufe des Verfahrens zu druckenden Druck-Oberflächen. Das auf die Referenzoberfläche gedruckte Dekor wird dann vermessen, indem die Messgrößen gemessen werden. Dadurch werden Referenz-Messdaten erhalten. Je besser die Referenzoberfläche den Druck-Oberflächen entspricht, desto leichter und genauer können die Referenz-Messdaten mit den Druck-Messdaten verglichen werden. Ist die Abweichung zwischen Referenzoberfläche und Druck-Oberfläche bekannt, kann durch ein Konvertierungstool eine Umrechnung erfolgen, sodass die verschiedenen Messdaten einander besser entsprechen. Dies ist jedoch prinzipiell fehlerbehaftet und daher ist eine möglichst gute Übereinstimmung der jeweiligen Oberflächen von Vorteil.

Ein großer Vorteil dieses Verfahrens besteht darin, dass die Referenz-Messdaten, die im Verfahrensschritt d. dem Vergleich zugrunde gelegt werden, tatsächliche Messdaten sind, die nicht aus einem digital vorhandenen, in einem elektronischen Datenspeicher hinterlegten Muster zu entnehmen sind. Damit ist das weitverbreitete Problem der Farbechtheit behoben, da bei dem Verfahren tatsächliche Messdaten, nämlich Referenz-Messdaten, eines tatsächlich gedruckten Dekors mit anderen tatsächlichen Messdaten, nämlich Druck-Messdaten, eines anderen tatsächlich gedruckten Dekors verglichen werden können. Es muss lediglich sichergestellt werden, dass das auf die Referenzoberfläche gedruckte Dekor exakt dem gewünschten Dekor entspricht. Andernfalls müsste die digitale Vorlage solange angepasst werden, bis das auf die Referenzoberfläche gedruckte Dekor dem gewünschten Dekor entspricht.

**In** einer bevorzugten Ausgestaltung des Verfahrens ist das vorbestimmte Kriterium erfüllt, wenn eine Abweichung eines oder mehrerer der Druck-Messdaten von dazu korrespondierenden Referenz-Messdaten größer als ein für die entsprechenden Messgrößen vorbestimmter Grenzwert ist. Besonders bevorzugt ist der vorbestimmte Grenzwert farb- und/oder ortsabhängig. Auf diese Weise können Gewichtungen vorgenommen werden. Hat beispielsweise für ein bestimmtes Dekor eine besondere Farbe eine sehr große Wirkung, weil sie beispielsweise leuchtend hervortritt oder besonders viel verwendet wird, um das Dekor zu drucken, ist es von Vorteil, darauf zu achten, dass bei dieser Farbe die Abweichung besonders klein ist. **In** diesem Fall wird der farbabhängige Grenzwert für diese Farbe besonders klein gewählt, sodass bereits relativ kleine Abweichungen dazu führen, dass die digitale Vorlage verändert werden muss. Ist hingegen eine Farbe für ein Dekor eher unwichtig, weil sie beispielsweise kaum vorhanden ist oder durch das menschliche Auge kaum oder gar nicht wahrnehmbar ist, kann der farbabhängige Grenzwert gewählt werden. Gleiches gilt für Ortsabhängigkeiten. Abweichungen am Rande des Dekors sind gegebenenfalls weniger relevant als Abweichungen direkt im Blickfeld, beispielsweise in der Mitte des Dekors.

Vorzugsweise beinhaltet das Ändern der digitalen Vorlage in Schritt e. folgende Schritte:
e1. Prüfen, ob das Maß der Abweichung ein Korrigierkriterium erfüllt und
e2a. Ändern der digitalen Vorlage oder
e2b. Ausgeben eines optischen und/oder akustischen und/oder elektronischen Warnsignals und Beenden des Verfahrens.

Einige Abweichungen zwischen den Referenz-Messdaten und den Druck-Messdaten sind auf Gründe zurückzuführen, die beispielsweise durch eine Änderung der digitalen Vorlage nicht zu beheben sind. Dies betrifft beispielsweise den Fall, dass ein falscher Primer aufgetragen wurde oder farbliche Änderungen durch einen Wechsel des Lieferanten für Drucktinte oder Rohpapier hervorgerufen wurden. Dies ist durch eine Änderung der digitalen Vorlage nicht oder kaum zu beheben, sodass in diesem Fall ein Korrigierkriterium nicht erfüllt ist. Das Korrigierkriterium gibt an, ob die durch das Maß der Abweichung detektierte Abweichung durch eine Änderung der digitalen Vorlage korrigierbar ist. Ist dies der Fall, wird gemäß Schritt e2a das Dekor geändert. Andernfalls wird gemäß dem Schritt e2b das Verfahren abgebrochen und ein entsprechendes Warnsignal ausgegeben.

In einer bevorzugten Ausgestaltung wird während der Schritte c. bis e. des Verfahrens wenigstens eine weitere Druck-Oberfläche mit dem zu druckenden Dekor bedruckt. Die Korrektur oder Änderung der digitalen Vorlage hat in diesem Fall also keine Auswirkungen auf das direkt im Anschluss gedruckte Dekor. Erst beim übernächsten oder einem noch späteren Dekor werden die Änderungen der digitalen Vorlage wirksam. Von Vorteil ist jedoch, wenn möglichst wenige Dekore zusätzlich gedruckt würden. Da sie mit einer noch nicht geänderten digitalen Vorlage gedruckt werden, beinhalten sie den gleichen Fehler, da dieser noch nicht behoben wurde. Sie werden also ebenfalls fehlerhaft und somit gegebenenfalls als Ausschuss produziert. Die Frage, wie viele weitere Druck-Oberflächen während der Schritte c. bis e. bedruckt werden, hängt von der Leistungsfähigkeit einer elektronischen Datenverarbeitungseinrichtung ab, die für diese Schritte zuständig ist und sie durchführt. Je schneller die Datenverarbeitungseinrichtung die Schritte ausführen kann, desto eher liegt die nötige Änderung der digitalen Vorlage vor und desto weniger zusätzliche Dekore werden gedruckt. Selbstverständlich hat auch die Taktfrequenz der Druckanlage einen großen Einfluss darauf.

Vorzugsweise werden Änderungen der digitalen Vorlage und/oder die ermittelten Maße der Abweichung für die unterschiedlichen Durchläufe des Verfahrens gespeichert und bevorzugt in einem elektronischen Datenspeicher hinterlegt.

Die Druck-Messdaten betreffen bevorzugt die gleichen Stellen und/oder den gleichen Bereich des Dekors wie die Referenz-Messdaten. Dadurch werden die jeweiligen Messdaten besonders einfach miteinander vergleichbar. Erfindungsgemäß betreffen die Druck-Messdaten und die Referenz-Messdaten das ganze Dekor. Dies bedeutet insbesondere, dass eine Vielzahl von Messpunkten vorhanden ist, an denen die jeweiligen Messdaten ermittelt werden, und diese Vielzahl von Messpunkten sich über das gesamte Dekor erstreckt. Vorzugsweise sind die Messpunkte äquidistant über das Dekor verteilt.

Eine Vorrichtung zum Durchführen des erfindungsgemäßen Verfahrens beinhaltet die Merkmale von Anspruch 11, d.h. eine elektronische Datenverarbeitungseinrichtung, insbesondere einen Computer oder einen Mikrochip, der eingerichtet ist, das Verfahren durchzuführen. Die Vorrichtung verfügt über wenigstens einen Sensor, der eingerichtet ist, die Messdaten aufzunehmen. Der wenigstens eine Sensor übermittelt die Messdaten als Signale an die elektronische Datenverarbeitungseinrichtung, die sie mit einem Empfangsmodul empfängt. Ein Vergleichsmodul vergleicht die Messdaten, die von dem wenigstens einen Sensor übermittelt werden, mit Referenz-Messdaten, die bevorzugt in einem elektronischen Datenspeicher, auf den das Empfangsmodul Zugriff hat, gespeichert sind. Auf diese Weise wird ein Maß für die Abweichung bestimmt, das anschließend einem Bewertungsmodul übergeben wird. Dieses Bewertungsmodul prüft, ob das Maß der Abweichung ein vorbestimmtes Kriterium erfüllt hat. Ist dies der Fall, wird in einem Änderungsmodul die Änderung bestimmt, die an der digitalen Vorlage vorgenommen werden muss. Diese wird dann der Druckanlage übermittelt, sodass das nächste zu druckende Dekor anhand der geänderten digitalen Vorlage gedruckt wird. Das Empfangsmodul, das Vergleichsmodul, das Bewertungsmodus und das Änderungsmodul sind in der elektronischen Datenverarbeitungseinrichtung realisiert und können als Software, also insbesondere als Computerprogramm-Produkt, ausgebildet sein.

In einer bevorzugten Ausgestaltung entspricht die digitale Vorlage nicht dem gesamten Dekor, sondern lediglich einem Teil. Dies ist dann sinnvoll, wenn beispielsweise die Datenverarbeitungskapazität nicht ausreicht, um das gesamte Dekor im Verfahren zugrunde zu legen. Zudem muss sichergestellt sein, dass Abweichungen, die die nur in dem Teil des Dekors, der der digitalen Vorlage entspricht, festgestellt werden, aussagekräftig für das Gesamtdekor sind. Für die Erfassung der Messdaten kann beispielsweise ein Überwachungssystem ACMS oder AVT verwendet werden. Die Messdatenerfassung erfolgt beispielsweise im Lab-System. Diese Messdaten können einfach miteinander verglichen werden, wobei beispielsweise Lab-Werte oder hyperspektrale Zeilen miteinander verglichen werden, die beispielsweise eine Auflösung von bevorzugt 80 bis 100 dpi, besonders bevorzugt 90 dpi für jeden Messwert haben. Mittels einer aus dem Stand der Technik bekannten Software, beispielsweise einer Software der Firma ipac kann auf diese Weise ein Maß für die Abweichung bestimmt werden, das in Prozent angegeben werden kann. So lassen sich besonders einfach Kriterien bestimmen, bei deren Erfüllung die digitale Vorlage geändert werden muss.

In einer bevorzugten Ausgestaltung wird das Verfahren beendet, wenn 3, bevorzugt 5, besonders bevorzugt 10 aufeinanderfolgende Änderungen der digitalen Vorlage nicht dazu geführt haben, dass das Maß der Abweichung das vorbestimmte Kriterium nicht mehr erfüllt, also die gedruckten Dekore dem gewünschten Qualitätsstandard entsprechen.

Vorzugsweise wird für das auf die Druck-Oberfläche gedruckte Dekor ein elektronisches Zertifikat erstellt und besonders bevorzugt gespeichert, wenn das Maß der Abweichung das vorbestimmte Kriterium nicht erfüllt, also die gewünschte Qualität vorhanden ist.

Die Arbeitsbreite einer digitalen Druckanlage beträgt vorzugsweise wenigstens 1300 mm, bevorzugt wenigstens 1600 mm, besonders bevorzugt wenigstens 2000 mm und höchstens 2300 mm, bevorzugt höchstens 2200 mm und besonders bevorzugt höchstens 2100 mm. Die Geschwindigkeit der Anlage, mit der die zu bedruckende Oberfläche durch die Anlage bewegt wird, beträgt beim Bedrucken von Papier vorzugsweise wenigstens 80 m/min, bevorzugt wenigstens 100 m/min und besonders bevorzugt wenigstens 130 m/min und höchsten 270 m/min, bevorzugt höchstens 200 m/min und besonders bevorzugt höchstens 140 m/min. Beim Bedrucken schwererer Gegenstände, beispielsweise Holzwerkstoffplatten beträgt die Geschwindigkeit vorzugsweise wenigstens 60 m/min, bevorzugt wenigstens 70 m/min und besonders bevorzugt wenigstens 80 m/min und höchstens 110 m/min, bevorzugt höchstens 100 m/min und besonders bevorzugt höchstens 90 m/min.

Wird auf die zu bedruckende Oberfläche ein Primer aufgetragen, beträgt die aufgetragene Menge vorzugsweise wenigstens 1 g/m², bevorzugt wenigstens 2 g/m² und besonders bevorzugt wenigstens 3 g/m² und höchstens 10 g/m², bevorzugt höchstens 6 g/m², besonders bevorzugt höchstens 4 g/m².

### Ausführungsbeispiel 1

Auf einer Papierdigitaldruckanlage wurde ein Holzdekor auf Papier gedruckt. Die Arbeitsbreite betrug im konkreten Ausführungsbeispiel 2070 mm. Die Geschwindigkeit betrug im konkreten Ausführungsbeispiel 135 m/min. Es wurde ein weißes Dekorpapier mit einem Flächengewicht von 65 g/m² sowie wasserbasierte CRYK Tinte und ein Inline Primerauftrag von ca. 3 g/m2 verwendet. Das Holzdekor hatte die Rapportabmessungen von 1400 mm Länge und die Breite 2070 mm. In der Produktionsanlage wurde über die gesamte Breite (2070 mm) ein Inline-Überwachungssystem der Firma ipac installiert. Von dem Dekor wurde eine digitale Vorlage gespeichert. Während der Produktion wurden von jedem Rapport, also jedem gedruckten Dekor, Druck-Messdaten erfasst und gespeichert. Von diesen Druck-Messdaten wird der Ähnlichkeitsindex, also ein Maß für die Abweichung, zu den Referenz-Messdaten berechnet. Das vorbestimmte Kriterium wurde vor Produktionsbeginn auf 92 % festgelegt. Wenn also das Maß für die Abweichung in diesem Fall 92 % unterschreitet, ist eine Änderung der digitalen Vorlage vorzunehmen. Bei dem produzierten Rapport 1.264 wurde ein Ähnlichkeitsindex von 89 % berechnet. Die Messdaten haben ergeben, dass die Abweichung in diesem Fall im Wesentlichen auf der b-Achse liegt, also auf der Gelb-Blau-Line (z.B. 5 % zu Blau). Da die Abweichung über der festgelegten Toleranz liegt, werden die Messdaten automatisch an die Software Colorgate übertragen und eine korrigierte digitale Vorlage des Holzdekors berechnet und gespeichert. Nach automatischer Übertragung an das Ausgabegerät, also die Druckanlage wird die bisher für den Druckauftrag verwendete Druckdatei (digitale Vorlage) automatisch durch die korrigierte digitale Vorlage des Holzdekors ersetzt und für den folgenden Rapport als Druckdatei zur Verfügung gestellt. Nach der Ausgabe der korrigierten digitalen Vorlage des Holzdekors wird von den nächsten Druck-Messdaten zu den Referenz-Messdaten ein Ähnlichkeitsindex von 94 % berechnet.

Der Zeitraum von der Messung der Druck-Messdaten eines ganzen Dekors bis zur Ausgabe der geänderten digitalen Vorlage des Holzdekors betrug eine Rapportlänge (ca. 0,62 Sekunden). In diesem Fall wurde ein ganzer Rapport gemessen, gespeichert und eine Abweichung erkannt. Der darauffolgende Rapport wird noch mit der nicht korrigierten digitalen Vorlage gedruckt, da diese Zeit für die Berechnung und den Austausch benötigt wird.

### Ausführungsbeispiel 2 - Digitaldruck Dekor Platte

Auf einer Plattendigitaldruckanlage (Arbeitsbreite 2070 mm, Plattengröße 2070 x 2800 mm, Geschwindigkeit 80 m/min, 8 mm HDF-Platten, Weiß grundiert, CRYK wasserbasierte Tinte, Inline Primerauftrag ca. 3 g/m2) wurde ein Holzdekor produziert. Das Holzdekor hat die Rapportabmessungen von 2800 mm Länge und die Breite 2070 mm. Die Lücke zwischen den Platten betrug 140 cm. In der Produktionsanlage wurde über die gesamte Breite (2070 mm) ein Inline-Überwachungssystem der Firma ipac installiert. Von dem Dekor wurde eine digitale Vorlage gespeichert. Während der Produktion werden von jedem Rapport, also von jedem gedruckten Dekor Druck-Messdaten erfasst und gespeichert. Von diesen Druck-Messdaten wird der Ähnlichkeitsindex zu den Referenz-Messdaten berechnet. Das vorbestimmte Kriterium wurde vor Produktionsbeginn auf 94 % festgelegt. Wenn also das Maß für die Abweichung in diesem Fall 94 % unterschreitet, ist eine Änderung der digitalen Vorlage vorzugnehmen. Bei dem produzierten Rapport 863 wurde ein Ähnlichkeitsindex von 92 % berechnet. Die Messdaten haben ergeben, dass die Abweichung im Wesentlichen auf der L-Achse liegen > Hell-Dunkel (z.B. 4 % zu Dunkel). Da die Abweichung über der festgelegten Toleranz liegt, werden die Messdaten automatisch an die Software Colorgate übertragen und eine korrigierte digitale Vorlage des Holzdekors berechnet und gespeichert. Nach automatischer Übertragung an das Ausgabegerät wurde die bisher für den Druckauftrag verwendete Druckdatei (digitale Vorlage) automatisch durch die korrigierte digitale Vorlage des Holzdekors ersetzt und für den folgenden Rapport als Druckdatei zur Verfügung gestellt. Nach der Ausgabe der korrigierten digitalen Vorlage des Holzdekors wurde von den ersten Druck-Messdaten ein Ähnlichkeitsindex von 96 % berechnet.

Der Zeitraum vom Erfassen der Druck-Messdaten bis zu dem Zeitpunkt, an dem die digitale Vorlage des Holzdekors korrigiert, ersetzt und ausgegeben wurde, entspricht der Lücke zwischen zwei Platten (140 cm = ca. 0,95 Sekunden). In diesem Fall wurde ein ganzer Rapport gemessen, gespeichert und eine Abweichung erkannt. In der darauffolgenden Lücke wurden die korrigierten Daten gedruckt, da diese Zeit für die Berechnung und den Austausch benötigt wird.

Durch das zeitnahe automatisierte Anpassen und Ersetzen der Druckdaten des Holzdekors konnte die Produktion innerhalb einer Lücke wieder den Vorgaben des Ähnlichkeitsindex entsprechen.

### Ausführungsbeispiel 3 - Papierdigitaldruck Dekor

Auf einer Papierdigitaldruckanlage wurde ein Holzdekor auf Papier gedruckt. Die Arbeitsbreite betrug im konkreten Ausführungsbeispiel 2070 mm. Die Geschwindigkeit betrug im konkreten Ausführungsbeispiel 135 m/min. Es wurde ein weißes Dekorpapier mit einem Flächengewicht von 65 g/m² sowie wasserbasierte CRYK Tinte und ein Inline Primerauftrag von ca. 3 g/m² verwendet. Das Holzdekor hatte die Rapportabmessungen von 1400 mm Länge und die Breite 2070 mm (. Die Lücke zwischen den Platten betrug 140 cm. In der Produktionsanlage wurde über die gesamte Breite (2070 mm) ein Inline-Überwachungssystem der Firma ipac installiert. Von dem Dekor wurde eine digitale Vorlage gespeichert. Während der Produktion werden von jedem Rapport, also von jedem gedruckten Dekor Druck-Messdaten erfasst und gespeichert. Von diesen Druck-Messdaten wird der Ähnlichkeitsindex zu den Referenz-Messdaten berechnet. Das vorbestimmte Kriterium wurde vor Produktionsbeginn auf 95 % festgelegt. Wenn also das Maß für die Abweichung in diesem Fall 95 % unterschreitet, ist eine Änderung der digitalen Vorlage vorzunehmen. Bei dem produzierten Rapport 4.587 wurde ein Ähnlichkeitsindex von 63 % berechnet. Die Messdaten haben ergeben das die Abweichung im Wesentlichen auf der L-Achse liegen > Hell-Dunkel (z.B. 30 % zu dunkel). Da die Abweichung über der festgelegten Toleranz liegt, werden die Messdaten automatisch an die Software Colorgate übertragen und eine korrigierte digitale Vorlage des Holzdekors berechnet und gespeichert. Nach automatischer der Übertragung an das Ausgabegerät wird die bisher für den Druckauftrag verwendete Druckdatei (digitale Vorlage) automatisch durch die korrigierte digitale Vorlage des Holzdekors ersetzt und für den folgenden Rapport als Druckdatei zur Verfügung gestellt. Nach der Ausgabe der korrigierten digitalen Vorlage des Holzdekors wurde von den ersten Druck-Messdaten ein Ähnlichkeitsindex von 75 % berechnet.

Der Grund für die Abweichung war in diesem Fall, dass eine falsche Papiersorte bedruckt wurde. Die Software konnte diese starke Abweichung nicht korrigieren.

Es ertönte ein Signalton, der den Maschinenführer auf die Abweichung aufmerksam macht. Die Produktionsanlage wurde gestoppt, der Trockner niedriger eingestellt und weiter produziert.

### Ausführungsbeispiel 4 - Digitaldruck Dekor Platte - Korrektur nicht möglich - Platte zu kalt - dann Signal

Auf einer Plattendigitaldruckanlage (Arbeitsbreite 2070 mm, Plattengröße 2070 mm x 2800 mm, Geschwindigkeit 80 m/min, HDF-Platten mit einer Dicke von 8 mm, Weiß grundiert, CRYK wasserbasierte Tinte, Inline Primerauftrag ca. 3 g/m2) wurde ein Holzdekor produziert. Das Holzdekor hat die Rapportabmessungen von 2800 mm Länge und die Breite 2070 mm. Die Lücke zwischen den Platten betrug 140 cm. In der Produktionsanlage wurde über die gesamte Breite (2070 mm) ein Inline-Überwachungssystem der Firma ipac installiert. Während der Produktion werden von jedem Rapport, also von jedem gedruckten Dekor Druck-Messdaten erfasst und gespeichert. Von diesen Druck-Messdaten wird der Ähnlichkeitsindex zu den Referenz-Messdaten berechnet. Das vorbestimmte Kriterium wurde vor Produktionsbeginn auf 90 % festgelegt. Wenn also das Maß für die Abweichung in diesem Fall 90 % unterschreitet, ist eine Änderung der digitalen Vorlage vorzugnehmen. Bei dem produzierten Rapport 1123 wurde ein Ähnlichkeitsindex von 58 % berechnet. Die Messdaten haben ergeben das die Abweichung im Wesentlichen auf der L-Achse liegen > Hell-Dunkel (z.B. 35 % zu dunkel). Da die Abweichung über der festgelegten Toleranz lag, wurden die Messdaten automatisch an Colorgate übertragen und eine korrigierte digitale Vorlage des Holzdekors berechnet und gespeichert. Nach automatischer der Übertragung an das Ausgabegerät wird die bisher für den Druckauftrag verwendete Druckdatei (digitale Vorlage) automatisch durch die korrigierte digitale Vorlage des Holzdekors ersetzt und für den folgenden Rapport als Druckdatei zur Verfügung gestellt. Nach der Ausgabe der korrigierten digitalen Vorlage des Holzdekors wurde von den ersten Druck-Messdaten ein Ähnlichkeitsindex von 74 % berechnet.

Der Grund für die Abweichung war in diesem Fall eine zu niedrige Plattentemperatur, die zu Folge hatte, dass die aufgebrachte Tinte zu langsam trocknet und zu tief in die Oberfläche der Platte einsinkt. Die Software konnte diese starke Abweichung nicht korrigieren.

Es ertönte ein Signalton, der den Maschinenführer auf die Abweichung aufmerksam macht und die Produktionsanlage stoppt automatisch. Der Maschinenführer kann die Parameter der Druckanlage überprüfen, korrigieren und weiter produzieren.

Die digitale Vorlage, die dem Druck zugrunde gelegt wird, ist ein wichtiger Aspekt, wenn es darum geht, ein möglichst gutes und vorlagengetreues Druckbild zu erreichen und die Menge an produziertem Ausschuss möglichst klein zu halten. Ein weiterer Aspekt betrifft beispielsweise die Feuchtigkeit der zu bedruckenden Oberfläche.

Bei den hier beschriebenen Verfahren wird vorzugsweise eine digitale Druckanlage verwendet, wobei die Druckanlage wenigstens ein Auftragswerk zum Auftragen einer Flüssigkeit auf das Werkstück und wenigstens eine Trocknereinheit zum Trocknen des Werkstückes aufweist und wobei das Verfahren folgende Schritte aufweist:
A. Bereitstellen von Informationen in einer elektrischen Steuerung der Druckanlage über die erwartete Feuchtigkeit des zumindest einen zu trocknenden Werkstückes,
B. Ermitteln von Trocknungsparametern, mit denen die wenigstens eine Trocknereinheit betreibbar ist, auf der Grundlage der bereitgestellten Informationen und
C. Trocknen des Werkstückes mittels der zumindest einen Trocknereinheit anhand der ermittelten Trocknungsparameter.

Durch ein derartiges Verfahren wird eine automatisierte und reproduzierbare Durchführung des Verfahrens und damit das Bedrucken der Oberfläche eines Werkstückes möglich. Auch eine große Anzahl von Werkstücken kann dadurch identisch oder zumindest nahezu identisch und mit möglichst wenig Ausschuss hergestellt werden. Zunächst werden Informationen über die erwartete Feuchtigkeit des zu trocknenden Werkstückes der elektrischen Steuerung, die beispielsweise eine elektronische Datenverarbeitungseinrichtung ist, bereitgestellt. Die elektrische Steuerung ermittelt dann Trocknungsparameter, die insbesondere Steuerparameter für die Trocknereinheit enthalten oder sind. Diese Trocknungsparameter enthalten beispielsweise die Trocknerleistung, eine Trocknertemperatur, eine Transportgeschwindigkeit, mit der das zu trocknende Werkstück durch die Trocknereinheit bewegt wird, und/oder die Art des Trockners. Der letzte Parameter ist insbesondere dann von Vorteil, wenn die Trocknereinheit unterschiedliche Trockner aufweist, die je nach Bedarf verwendet werden können. Mit den so ermittelten Trocknungsparametern wird die Trocknereinheit betrieben, um das jeweilige Werkstück zu trocknen.

Vorzugsweise beinhaltet das Bereitstellen von Informationen folgende Schritte:
A1. Messen der Feuchtigkeit der Oberfläche des Werkstückes mittels wenigstens eines Feuchtigkeitssensors,
A2. Bereitstellen der gemessenen Feuchtigkeit in der elektrischen Steuerung.

Die Vorrichtung, die zum Durchführen eines derartigen Verfahrens verwendet wird, verfügt über wenigstens einen Feuchtigkeitssensor, der eingerichtet ist, die Feuchtigkeit der Oberfläche des Werkstückes zu messen. Der wenigstens eine Sensor ist zudem eingerichtet, die Messwerte, die er ermittelt, an die elektronische Datenverarbeitungseinrichtung oder eine andere Art der elektrischen Steuerung zu übermitteln. Die Messwerte erlauben einen Rückschluss auf die tatsächliche Feuchtigkeit der Oberfläche des Werkstückes, das getrocknet werden soll, und werden als Informationen über die erwartete Feuchtigkeit in der elektrischen Steuerung bereitgestellt. Vorzugsweise wird die Feuchtigkeit möglichst nah vor der Trocknereinheit bestimmt, damit die Messwerte möglichst gut die Feuchtigkeit beschreiben, die das Werkstück beim Eintritt in die Trocknereinheit aufweist. Andererseits müssen die Transportgeschwindigkeit, mit der das Werkstück zu der Trocknereinheit transportiert wird, und der Abstand zwischen der Stelle, an der die Messung durchgeführt wird und dem Beginn der Trocknung so aufeinander abgestimmt sein, dass die elektrische Steuerung, insbesondere die elektronische Datenverarbeitungseinrichtung ausreichend Zeit hat, die Trocknungsparameter zu bestimmen, bevor das zu trocknende Werkstück in den Trockner geleitet wird. Dieser Abstand hängt einerseits von der Transportgeschwindigkeit andererseits von den Messdaten und der Geschwindigkeit der Datenverarbeitungseinrichtung ab.

Vorzugsweise wird die Feuchtigkeit mittels eines Infrarot(IR)-, Nah-Infrarot (NIR)- oder Mikrowellenmessverfahrens und/oder einer L-Wertbestimmung ermittelt. Selbstverständlich ist auch die Kombination unterschiedlicher Verfahren möglich und gegebenenfalls von Vorteil. Die Wahl des tatsächlichen Verfahrens hängt insbesondere davon ab, welche Informationen benötigt werden, um die Trocknungsparameter möglichst optimal bestimmen zu können. So kann es von Vorteil sein, die Feuchtigkeit nur in einem möglichst engen Bereich an der Oberfläche, beispielsweise bis zu einer Tiefe von 1 mm, zu bestimmen. In anderen Verfahren ist es von Vorteil, die Feuchtigkeit auch in tieferen Schichten, beispielsweise bis zu einer Tiefe von 3 mm oder 5 mm und nicht nur an der Oberfläche des Werkstückes zu bestimmen. Handelt es sich bei dem zu bedruckenden Werkstück beispielsweise um eine Papierbahn oder ein bereits zugeschnittenes Dekorpapier, wird die Feuchtigkeit vorzugsweise bis zu einer Tiefe von einigen Hundertstel Millimeter bis zu einigen Zehntel Millimetern, beispielsweise von 0,01 mm bis 0,5 mm bestimmt.

In einer bevorzugten Ausgestaltung wird die erwartete Feuchtigkeit berechnet. Dies geschieht bevorzugt auf der Grundlage von Informationen über wenigstens eine vor dem Trocknen auf das Werkstück aufgebrachten Flüssigkeitsmenge, wenigstens eine Temperatur, bevorzugt einen zeitlichen Temperaturverlauf, insbesondere des Werkstückes, des Raumes und/oder der aufgebrachten Flüssigkeit und/oder eine Feuchtigkeit des Werkstückes. Wurde vor dem Trocknen wenigstens eine Flüssigkeitsmenge auf das Werkstück aufgebracht, hat diese selbstverständlich einen großen Einfluss auf die Feuchtigkeit insbesondere an der Oberseite und Oberfläche des Werkstückes. Die Flüssigkeit, die aufgebracht wird, kann beispielsweise ein Primer, eine Grundierung, Tinte oder eine Schutzschicht sein. Die Temperatur des Werkstückes, des Raumes und/oder der aufgebrachten Flüssigkeit hat einen Einfluss darauf, wieviel Feuchtigkeit beispielsweise das Werkstück aufnehmen kann und/oder wieviel Feuchtigkeit in das Werkstück eindringt.

Vorzugsweise sind die bereitgestellten Informationen über die erwartete Feuchtigkeit und die ermittelten Trocknungsparameter jeweils eine Funktion der Position auf der Oberfläche des Werkstückes. Mit anderen Worten wird sowohl die erwartete Feuchtigkeit als auch der Trocknungsparameter ortsabhängig angegeben. Dies ist insbesondere dann von Vorteil, wenn beispielsweise die erwartete Feuchtigkeit inhomogen über die Oberfläche des Werkstückes verteilt ist. Dies kann beispielsweise geschehen, wenn Drucktinte unterschiedlich stark aufgebracht wird, da beispielsweise einige Bereiche der Oberfläche des Werkstückes stärker und damit mit mehr Tinte bedruckt werden, als andere Bereiche. Auch die Verwendung unterschiedlicher Tinten, beispielsweise für unterschiedliche Farben kann dazu führen, dass unterschiedlich viel Feuchtigkeit auf der Oberfläche des Werkstücks aufgebracht wird und/oder in die Oberseite des Werkstücks eindringt.

Eine inhomogene Feuchtigkeitsmenge kann auch dadurch entstehen, dass die Grundierung unterschiedlich stark an unterschiedlichen Stellen auf die Oberseite des Werkstückes aufgebracht wird. Dies ist beispielsweise dann der Fall, wenn durch die Grundierung Farbschwankungen, beispielsweise eine Wolkigkeit des zu bedruckenden Werkstückes, beispielsweise einer Papierbahn, ausgeglichen werden sollen, die zuvor beispielsweise mittels einer Kamera, erfasst und ausgewertet wurde. **In** diesem Fall ist es sinnvoll, dunklere Stellen auf der zu bedruckenden Oberseite des Werkstückes mit mehr Grundierung zu versehen, als hellere Stellen. Dadurch werden nicht nur unterschiedliche Mengen Grundierung, sondern damit auch unterschiedliche Feuchtigkeit aufgebracht.

Vorteilhafterweise ist die wenigstens eine Trocknereinheit eingerichtet, verschiedene Bereiche der Oberfläche des Werkstückes unterschiedlich stark zu trocknen. Damit kann auf unterschiedlich große Feuchtigkeitsmengen in den jeweiligen Bereichen der Oberfläche des Werkstückes reagiert werden und eine homogene Feuchtigkeit hergestellt werden. Die Trocknereinheit kann dazu beispielsweise mehrere Trocknermodule, beispielsweise 3, 5 oder 7 Trocknermodule aufweisen, die so angeordnet sind, dass sie unterschiedliche Bereiche des Werkstückes trocknen. So können sie beispielsweise in einer Richtung senkrecht zur Transportrichtung des Werkstückes durch die Druckanlage nebeneinander angeordnet sein. Durch diese Anordnung lassen sich jedoch nicht nur inhomogene Feuchtigkeitsverteilungen, die vor der Trocknereinheit auf der Oberfläche des Werkstückes vorherrschen können, in homogene Feuchtigkeit überführen. Auch die gezielte Erzeugung einer inhomogenen Feuchtigkeit auf der Oberfläche des Werkstückes ist möglich und kann von Vorteil sein. Wie bereits dargelegt, hat die Feuchtigkeit der Oberfläche des Werkstückes Einfluss darauf, wie sich beispielsweise eine Tinte oder eine weitere aufgebrachte Flüssigkeit an der Oberfläche verhält. Auch dies kann an unterschiedlichen Stellen unterschiedlich gewünscht sein, sodass eine inhomogene Feuchtigkeit von Vorteil ist.

Eine derartige "Ziel-Feuchtigkeitsverteilung", die auch als Soll-Feuchtigkeit bezeichnet werden kann, ist bevorzugt in einem elektronischen Datenspeicher hinterlegt, auf den die elektrische Steuerung, insbesondere die elektronische Datenverarbeitungseinrichtung, der Druckanlage zugreifen kann. Diese Soll-Feuchtigkeit wird vorzugsweise bei der Ermittlung der Trocknerparameter berücksichtigt.

**In** bevorzugten Ausgestaltungen des Verfahrens wird das Werkstück mehrfach getrocknet, was vorteilhafterweise in unterschiedlichen Trocknereinheit geschieht. Dabei werden vorzugsweise vor jedem Trocknen die Verfahrensschritte a. und b. ausgeführt, also Informationen über die erwartete Feuchtigkeit bereitgestellt und Trocknungsparameter für die Trocknereinheit ermittelt. Diese werden an die Trocknereinheit übermittelt, sodass die Trocknereinheit damit betrieben werden kann. Besonders bevorzugt wird das Werkstück vor und/oder nach dem Auftragen wenigstens einer Flüssigkeit auf das Werkstück getrocknet. Vorzugsweise werden mehrere Male Flüssigkeiten auf die Oberfläche des Werkstückes aufgebracht. Dies geschieht bevorzugt in mehreren Auftragswerken, die beispielsweise Walzen, Druckköpfe oder sonstige Auftragsmittel sein können. Die jeweils aufgetragene Feuchtigkeit, gegebenenfalls in Abhängigkeit von der Position auf der Oberfläche des Werkstückes wird in einem elektronischen Datenspeicher hinterlegt und die elektrische Steuerung bereitgestellt.

So kann beispielsweise zunächst eine Grundierung auf die Oberfläche aufgebracht werden, bevor beispielsweise in mehreren Druckgängen durch mehrere Druckköpfe, die die Auftragswerke darstellen, unterschiedlich farbige Tinte aufgebracht wird. Bevorzugt wird nach jedem Auftragen einer Flüssigkeit das Werkstück und insbesondere dessen Oberfläche getrocknet. Dazu durchläuft das Werkstück vorteilhafterweise nach jedem Auftragen eine Trocknereinheit. Besonders bevorzugt wird auch vor dem ersten Auftragen einer Flüssigkeit und nach dem letzten Auftragen einer Flüssigkeit eine Trocknereinheit durchlaufen.

Bevorzugt weist also die Druckanlage mehrere Auftragswerke auf, mittels derer wenigstens eine Flüssigkeit auf das Werkstück aufgebracht wird, wobei das Werkstück vor und/oder nach dem Aufbringen wenigstens einer Flüssigkeit getrocknet wird.

Vorteilhafterweise wird nach dem Trocknen mittels wenigstens einer Trocknereinheit die Feuchtigkeit der Oberfläche des Werkstückes mittels wenigstens eines Feuchtigkeitssensors gemessen und mit einem vorbestimmten Sollwert verglichen, wobei ein Maß für die Abweichung der gemessenen Feuchtigkeit von dem vorbestimmten Sollwert in das zukünftige Ermitteln der Trocknungsparameter einfließt. Es ist also von Vorteil, nicht nur vor dem eigentlichen Trocknen die Feuchtigkeit der Oberfläche des Werkstückes zu bestimmen um Trocknungsparameter zu ermitteln, sondern auch nach dem eigentlichen Trocknen erneut oder erstmals die Feuchtigkeit zu messen. Damit kann einerseits überprüft werden, ob die Soll-Feuchtigkeit erreicht wurde, ob also die ermittelten Trocknungsparameter das gewünschte Ziel erreichen. Ist dies der Fall, ist eine Änderung der Routinen und Einstellungen in der elektrischen Steuerung, die die Trocknungsparameter ermittelt, nicht nötig. Ist die Abweichung jedoch größer als ein vorbestimmter Grenzwert, werden die für das Ermitteln der Trocknungsparameter verwendeten Berechnungen in der elektrischen Steuerung angepasst und modifiziert.

Durch das Messen der tatsächlichen Feuchtigkeit kann zudem die erwartete Feuchtigkeit für im Produktionsprozess später angeordnete Trocknereinheiten besser bestimmt und somit bessere Informationen der elektrischen Steuerung zur Verfügung gestellt werden. Das zukünftige Ermitteln von Trocknungsparametern kann sowohl Trocknungsparameter von später verwendeten Trocknereinheiten betreffen, die beim Bedrucken der gleichen Oberfläche des Werkstückes verwendet werden. Das zukünftige Ermitteln kann aber auch Trocknungsparameter betreffen, die beim Bedrucken von Oberflächen weiterer Werkstücke verwendet werden.

Vorzugsweise ist das Werkstück eine Papierbahn und in der Druckanlage wird ein Maß einer Faltenbildung dieser Papierbahn erfasst. Dies geschieht bevorzugt durch eine 2-D- und/oder 3-D-Profilmessung, die besonders bevorzugt mittels eines Laserscanners durchgeführt wird. Vorzugsweise wird das erfasste Maß für die Faltenbildung mit einem vorgegebenen Sollwert verglichen. Ist die Abweichung zwischen dem erfassten Maß und diesem Sollwert größer als ein vorbestimmter Grenzwert, wird die Spannung, die auf das Werkstück in der Druckanlage ausgeübt wird, verändert. Dabei wird je nach Abweichung die Spannung erhöht oder verringert.

Die Erfindung löst die gestellte Aufgabe zudem durch eine digitale Druckanlage zum Durchführen eines der hier beschriebenen Verfahren, die wenigstens ein Auftragswerk zum Auftragen einer Flüssigkeit auf das Werkstück und wenigstens eine Trocknereinheit zum Trocknen des Werkstückes und eine elektrische Steuerung, insbesondere eine elektronische Datenverarbeitungseinrichtung, aufweist, die eingerichtet ist zum Durchführen eines der hier beschriebenen Verfahren.

Mithilfe der beiliegenden Zeichnungen wird nachfolgend ein Ausführungsbeispiel der vorliegenden Erfindung näher erläutert. Es zeigen
- Figur 1 -: die schematische Darstellung eines Ablaufes eines Verfahrens gemäß einem ersten Ausführungsbeispiel der vorliegenden Erfindung und
- Figur 2 -: die schematische Darstellung von Auswirkungen auf den Produktionsprozess.

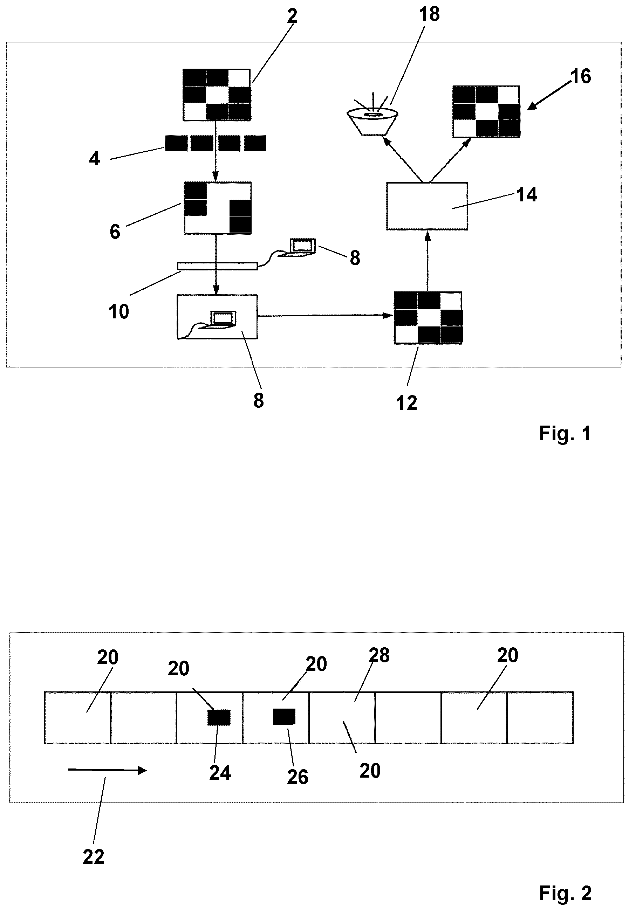

Figur 1 zeigt schematisch den Ablauf eines Verfahrens gemäß einem ersten Ausführungsbeispiel der vorliegenden Erfindung. Zunächst wird eine digitale Vorlage 2 bereitgestellt, die nur schematisch dargestellt ist. Anhand dieser digitalen Vorlage wird mittels einer digitalen Druckanlage 4 ein Dekor auf eine nicht dargestellte Druck-Oberfläche gedruckt. Von diesem gedruckten Dekor werden ortsaufgelöste Druck-Messdaten 6 ermittelt, indem beispielsweise das gedruckte Dekor mit in Figur 1 nicht dargestellten Sensoren vermessen wird. Die Druck-Messdaten 6 werden mit in einer elektronischen Datenverarbeitungseinrichtung 8 hinterlegten Referenz-Messdaten in einem Vergleichsmodul 10 verglichen. Auf der Grundlage des Ergebnisses dieses Vergleiches wird das Maß der Abweichung in der elektronischen Datenverarbeitungseinrichtung 8 bestimmt. Erfüllt das Maß ein vorbestimmte Kriterium, wird in der elektronischen Datenverarbeitungseinrichtung 8 eine geänderte digitale Vorlage 12 bestimmt, die dann im Verfahrensschritt 14 in der Druckanlage 4 die bisherige digitale Vorlage 2 ersetzt. Ist die vorgenommene Änderung der digitalen Vorlage ausreichend, wird die Produktion entsprechend der schematischen Darstellung 16 fortgeführt. Andernfalls wird ein Signal 18 ausgegeben, welches gegebenenfalls die Produktion stoppt.

Figur 2 zeigt schematisch verschiedene Druck-Oberflächen 20, die entlang der durch den Pfeil 22 angedeuteten Produktionsrichtung bedruckt werden. Die Druck-Oberflächen 20 werden also in der Reihenfolge von links nach rechts bedruckt. Man beachte, dass die tatsächliche Transportrichtung innerhalb einer Druckanlage in die entgegengesetzte Richtung verläuft. Nachdem die Druck-Oberfläche 24 bedruckt ist, werden die Druck-Messdaten ermittelt, der Vergleich mit den Referenz-Messdaten durchgeführt und ein Maß für die Abweichung bestimmt. Erfüllt dieses das vorbestimmte Kriterium, wird eine geänderte digitale Vorlage erstellt und an die Druckanlage übermittelt. Während dieser Schritte wird die Druck-Oberfläche 26 bedruckt. Dabei wird im gezeigten Ausführungsbeispiel noch die unveränderte digitale Vorlage, die auch für den Druck auf der Druck-Oberfläche 24 verwendet wurde, verwendet. Erst für den Druck der Druck-Oberfläche 28 wird die geänderte digitale Vorlage verwendet.

### Bezugszeichenliste

- 2: digitale Vorlage
- 4: digitale Druckanlage
- 6: Druck-Messdaten
- 8: elektronische Datenverarbeitungseinrichtung
- 10: Vergleichsmodul
- 12: geänderte digitale Vorlage
- 14: Verfahrensschritt
- 16: Fortführung der Produktion
- 18: Signal
- 20: Druck-Oberfläche
- 22: Pfeil
- 24: Druck-Oberfläche
- 26: Druck-Oberfläche
- 28: Druck-Oberfläche

## Patentansprüche

1. Verfahren zum Drucken eines zu druckenden Dekors auf eine Mehrzahl von Druck-Oberflächen mittels einer digitalen Druckanlage (4), wobei das Verfahren die folgenden Schritte aufweist:
a. Bereitstellen einer digitalen Vorlage (2) und von Referenz-Messdaten eines zu druckenden Dekors, die hyperspektral und ortsaufgelöst sind,
b. Drucken des zu druckenden Dekors anhand der digitalen Vorlage (2) auf eine Druck-Oberfläche (20),
c. Messen von Messgrößen des auf die Druck-Oberfläche (20) gedruckten Dekors, so dass Druck-Messdaten (6) erhalten werden, die an einer Vielzahl von Messpunkten ermittelt werden, die sich über das ganze Dekor erstrecken, wobei die Druck-Messdaten (6) hyperspektral und ortsaufgelöst sind, aber nicht dem ganzen Bild des Dekors entsprechen,
d. Vergleichen der Druck-Messdaten (6) mit den Referenz-Messdaten und Ermitteln eines Maßes einer Abweichung der Druck-Messdaten (6) von den Referenz-Messdaten,
e. Ändern der digitalen Vorlage (2), falls das Maß der Abweichung ein vorbestimmtes Kriterium erfüllt,
f. Wiederholen der Schritte b. bis f..

2. Verfahren nach Anspruch 1, **dadurch gekennzeichnet, dass** ein zeitlicher Abstand zwischen zwei aufeinander folgenden Ausführungen des Schrittes b. unabhängig davon ist, ob die digitale Vorlage geändert wurde.

3. Verfahren nach Anspruch 1 oder 2, **dadurch gekennzeichnet, dass** das Bereitstellen der Referenz-Messdaten in Schritt a) folgende Schritte beinhaltet:
a1. Bereitstellen einer digitalen Vorlage (2) eines zu druckenden Dekors,
a2. Drucken des zu druckenden Dekors anhand der digitalen Vorlage (2) auf eine Referenzoberfläche,
a3. Messen der Messgrößen des auf die Referenzoberfläche gedruckten Dekors, so dass die Referenz-Messdaten erhalten werden.

4. Verfahren nach einem der vorstehenden Ansprüche, **dadurch gekennzeichnet, dass** das vorbestimmte Kriterium erfüllt ist, wenn eine Abweichung eines oder mehrerer der Druck-Messdaten (6) von dazu korrespondierenden Referenz-Messdaten größer als ein für die entsprechende Messgröße vorbestimmter Grenzwert ist.

5. Verfahren nach Anspruch 4, **dadurch gekennzeichnet, dass** der vorbestimmte Grenzwert farb- und/oder ortsabhängig ist.

6. Verfahren nach einem der vorstehenden Ansprüche, **dadurch gekennzeichnet, dass** das Ändern der digitalen Vorlage in Schritt e. folgende Schritte beinhaltet:
e1. Prüfen, ob das Maß der Abweichung ein Korrigierkriterium erfüllt und
e2.a Ändern der digitalen Vorlage oder
e2.b Ausgeben eines optischen und/oder akustischen und/oder eines elektronischen Warnsignals (18) und Beenden des Verfahrens.

7. Verfahren nach einem der vorstehenden Ansprüche, **dadurch gekennzeichnet, dass** während der Schritte c. bis e. wenigstens eine weitere Druck-Oberfläche (26) mit dem zu druckenden Dekor bedruckt wird.

8. Verfahren nach einem der vorstehenden Ansprüche, **dadurch gekennzeichnet, dass** Änderungen der digitalen Vorlage (2) und/oder die ermittelten Maße der Abweichung gespeichert werden.

9. Verfahren nach einem der vorstehenden Ansprüche, **dadurch gekennzeichnet, dass** die Druck-Messdaten (6) die gleichen Stellen und/oder den gleichen Bereich des Dekors betreffen wie die Referenz-Messdaten.

10. Verfahren nach Anspruch 9, **dadurch gekennzeichnet, dass** die Druck-Messdaten (6) und die Referenz-Messdaten das ganze Dekor betreffen.

11. Vorrichtung zum Drucken eines zu druckenden Dekors auf eine Mehrzahl von Druck-Oberflächen mittels einer digitalen Druckanlage (4) anhand einer digitalen Vorlage die wenigstens einen Sensor, der eingerichtet ist, die Messdaten aufzunehmen, und eine elektronische Datenverarbeitungseinrichtung aufweist, die eingerichtet ist, das Verfahren einem der vorstehenden Ansprüche durchzuführen.

## Claims

1. A method for printing a decoration to be printed onto a plurality of print surfaces by means of digital printing equipment (4), the method comprising the following steps:
a. providing a digital template (2) and reference measurement data of a decoration to be printed, said data being hyperspectral and spatially resolved,
b. printing the decoration to be printed onto a print surface (20) using the digital template (2),
c. measuring measured variables of the decoration printed on the print surface (20), thereby obtaining print measurement data (6) which are determined at a plurality of measurement points, which extends across the entire decoration, wherein the print measurement data are hyperspectral and spatially resolved, but do not correspond to the full picture of the décor,
d. comparing the print measurement data (6) with the reference measurement data and determining a measure of deviation of the print measurement data (6) from the reference measurement data,
e. modifying the digital template (2) if the measure of the deviation meets a predetermined criterion,
f. repeating steps b. to f..

2. The method according to claim 1, **characterized in that** a time lag between two consecutive embodiments of step b. does not depend on whether the digital template has been modified.

3. The method according to claim 1 or 2, **characterized in that** the provision of the reference measurement data in step a) comprises the following steps:
a1. Providing a digital template (2) of a decoration to be printed,
a2. Printing the decoration to be printed onto a reference surface using the digital template (2),
a3. Measuring the measured variables of the decoration printed onto the reference surface, so that the reference measurement data are obtained.

4. The method according to one of the preceding claims, **characterized in that** the predetermined criterion is met when a deviation of one or multiple print measurement data (6) from corresponding reference measurement data is greater than a predetermined limit value for the corresponding measurement variable.

5. The method according to claim 4, **characterized in that** the predetermined limit value is dependent on color and/or location.

6. The method according to one of the preceding claims, **characterized in that** the modification of the digital template in step e) comprises the following steps:
e1. Checking whether the measure of deviation meets a correction criterion and
e2.a Modifying the digital template or
e2.b Emitting an optical and/or acoustic and/or electronic warning signal (18) and terminating the method.

7. The method according to one of the preceding claims, **characterized in that** during steps c. to e. the decoration to be printed is printed onto at least one further print surface (26).

8. The method according to one of the preceding claims, **characterized in that** modifications of the digital template (2) and/or the determined measures of deviation are saved.

9. The method according to one of the preceding claims, **characterized in that** the print measurement data (6) relate to the same points and/or the same area of the decoration as the reference measurement data.

10. The method according to claim 9, **characterized in that** the print measurement data (6) and the reference measurement data relate to the entire decoration.

11. A device for printing a decoration to be printed onto a plurality of print surfaces by means of digital printing equipment (4) using the digital template (2), the digital printing equipment comprising a sensor, that is configured to record measurement data, and an electronic data processing device, which is configured to carry out a method according to one of the preceding claims.

## Revendications

1. Procédé d'impression d'un décor à imprimer sur une pluralité de surfaces d'impression au moyen d'une installation d'impression numérique (4), ledit procédé comprenant les étapes suivantes consistant à :
a. fournir un modèle numérique (2) et des données de mesure de référence d'un décor à imprimer, qui sont hyperspectrales et à résolution spatiale,
b. imprimer le décor à imprimer sur une surface d'impression (20) en se basant sur le modèle numérique (2),
c. mesurer des grandeurs de mesure du décor imprimé sur la surface d'impression (20), de manière à obtenir des données de mesure d'impression (6) déterminées au niveau d'une multitude de points de mesure qui s'étendent sur l'ensemble du décor, sachant que les données de mesure d'impression (6) sont hyperspectrales et à résolution spatiale, mais ne correspondent pas à l'ensemble de l'image du décor,
d. comparer les données de mesure d'impression (6) aux données de mesure de référence et déterminer un degré de l'écart entre les données de mesure d'impression (6) et les données de mesure de référence,
e. modifier le modèle numérique (2) si le degré de l'écart satisfait à un critère prédéfini,
f. répéter les étapes b. à f..

2. Procédé selon la revendication 1,
**caractérisé en ce qu'**un intervalle de temps entre deux exécutions successives de l'étape b. est indépendant du fait que le modèle numérique ait été modifié ou non.

3. Procédé selon la revendication 1 ou 2,
**caractérisé en ce que** la fourniture des données de mesure de référence à l'étape a. comprend les étapes suivantes consistant à :
a1. fournir un modèle numérique (2) d'un décor à imprimer,
a2. imprimer le décor à imprimer sur une surface de référence en se basant sur le modèle numérique (2),
a3. mesurer les grandeurs de mesure du décor imprimé sur la surface de référence, de manière à obtenir les données de mesure de référence.

4. Procédé selon l'une des revendications précédentes,
**caractérisé en ce que** le critère prédéfini est satisfait lorsqu'un écart entre une ou plusieurs des données de mesure d'impression (6) et les données de mesure de référence correspondantes est supérieur à une valeur limite prédéfinie pour la grandeur de mesure respective.

5. Procédé selon la revendication 4,
**caractérisé en ce que** la valeur limite prédéfinie dépend de la couleur et/ou de l'emplacement.

6. Procédé selon l'une des revendications précédentes,
**caractérisé en ce que** la modification du modèle numérique à l'étape e. comprend les étapes suivantes consistant à :
e1. vérifier si le degré de l'écart satisfait à un critère de correction, et
e2.a modifier le modèle numérique, ou
e2.b émettre un signal d'avertissement visuel et/ou sonore et/ou électronique (18) et mettre fin au procédé.

7. Procédé selon l'une des revendications précédentes,
**caractérisé en ce que**, pendant les étapes c. à e., le décor à imprimer est imprimé sur au moins une autre surface d'impression (26).

8. Procédé selon l'une des revendications précédentes,
**caractérisé en ce que** les modifications apportées au modèle numérique (2) et/ou les degrés déterminés de l'écart sont mis en mémoire.

9. Procédé selon l'une des revendications précédentes,
**caractérisé en ce que** les données de mesure d'impression (6) concernent les mêmes emplacements et/ou la même zone du décor que les données de mesure de référence.

10. Procédé selon la revendication 9,
**caractérisé en ce que** les données de mesure d'impression (6) et les données de mesure de référence concernent l'ensemble du décor.

11. Dispositif destiné à imprimer un décor à imprimer sur une pluralité de surfaces d'impression au moyen d'une installation d'impression numérique (4) en se basant sur un modèle numérique, comprenant au moins un capteur conçu pour saisir les données de mesure et un dispositif électronique de traitement de données conçu pour mettre en œuvre le procédé selon l'une des revendications précédentes.
